(19) Europäisches Patentamt
European Patent Office
Office européen des brevets

(11) EP 4 113 297 A1

(12) DEMANDE DE BREVET EUROPEEN

(43) Date de publication:
04.01.2023 Bulletin 2023/01

(51) Classification Internationale des Brevets (IPC):
*G06F 9/48* (2006.01)

(21) Numéro de dépôt: 21305901.7

(52) Classification Coopérative des Brevets (CPC):
G06F 9/4881

(22) Date de dépôt: 30.06.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(71) Demandeur: Bull SAS
78340 Les Clayes-sous-Bois (FR)

(72) Inventeur: GERPHAGNON, Jean-Olivier
38450 Vif (FR)

(74) Mandataire: Cabinet Camus Lebkiri
25 rue de Maubeuge
75009 Paris (FR)

(54) **PROCÉDÉ DE GESTION DES TRAVAUX DANS UN SYSTÈME INFORMATIQUE ET SYSTÈME ASSOCIÉ**

(57) Un aspect de l'invention concerne un procédé de gestion des travaux dans un système informatique (SI) sur lequel s'exécute une pluralité de travaux, le système informatique (SI) comprenant une pluralité de nœuds informatiques (NDi) et au moins un premier niveau de stockage (NS1) associé à un premier niveau de performance et un deuxième niveau de stockage (NS2) associé à un deuxième niveau de performance inférieur au premier niveau de performance, chaque travail étant associé à un niveau de priorité déterminé à partir d'un jeu de paramètres comprenant le ou les nœud (NDi) sur lesquels doit être exécuté le travail, le procédé comprenant une étape d'ordonnancement des travaux en fonction du niveau de priorité associé à chaque travail ; le jeu de paramètres utilisé pour la détermination du niveau de priorité comprenant également un premier paramètre relatif au niveau de stockage à utiliser pour les données nécessaires à l'exécution du travail considéré et un deuxième paramètre relatif à la position des données nécessaires à l'exécution du travail (TAi) considéré.

FIG. 2

**Description**

## DOMAINE TECHNIQUE DE L'INVENTION

Le domaine technique de l'invention est celui de la gestion des travaux et des niveaux de stockage dans un système informatique.

La présente invention concerne un procédé de gestion des travaux et en particulier un procédé de gestion des travaux qui prend en compte le niveau de stockage des données nécessaires à leur exécution.

## ARRIERE-PLAN TECHNOLOGIQUE DE L'INVENTION

La gestion des données, et en particulier de leur stockage, revêt un aspect important dans la gestion des systèmes informatiques, et notamment les infrastructures de calcul hautes performances (HPC). En effet, les performances (bande passante, latence faible, etc.) d'un moyen de stockage sont en général proportionnelles à son coût. Aussi, la plupart des systèmes informatiques implémentent des solutions multi-tiers généralement découpées en niveaux de stockage, chaque niveau de stockage étant associé à un niveau de performance.

Les mouvements de données entre les différents niveaux de stockage sont, en général, gérés via des règles de déplacements automatiques des données. Ces règles permettent de gérer dynamiquement les déplacements de ces données afin de maximiser l'utilisation des niveaux les plus rapides et sont généralement basés sur le temps écoulé depuis le dernier accès aux données, les déplacements étant effectués vers le niveau de stockage aux performances moindres lorsque ce temps écoulé est supérieur à un seuil donné. Cette méthodologie est souvent nommée HSM (pour Hierarchical Storage Management en anglais ou gestion hiérarchique des données en français) dans les infrastructures de calcul HPC. Si de tels déplacements sont relativement rapides lorsqu'ils ont lieu entre deux niveaux de stockage performants, ils sont en revanche problématiques lorsque l'un des niveaux de stockage a de faibles performances, par exemple en matière de bande passante. Or, tout déplacement de données entraine un délai d'exécution du travail associé auxdites données plus important que lorsque lesdites données sont immédiatement disponibles sur le bon niveau de stockage. Aussi, il est préférable d'avoir les données disponibles au bon niveau de stockage afin de minimiser les temps de calcul et éviter les transferts inutiles.

Or, les méthodes proposées dans l'état de la technique ne parviennent pas toujours à remplir cet objectif. Les limites des méthodes existantes peuvent être illustrées au travers d'un exemple dans lequel un travail doit être exécuté tous les mois en utilisant un jeu de données stocké sur un premier niveau de stockage associé à un niveau de performance élevé. Lorsque le déplacement des données comporte une règle de déplacement des données non lues tous les mois, le jeu de données en question est transféré sur un deuxième niveau de stockage moins rapide à l'issue de ce délai alors qu'une nouvelle instance du travail évoqué précédemment sera exécutée le lendemain de ce déplacement. Il sera donc nécessaire de rapatrier le jeu de données du deuxième niveau de stockage vers le premier niveau de stockage avant de pouvoir à nouveau exécuter le travail en question. Ainsi, dans cet exemple, deux déplacements inutiles auront été réalisés. Bien entendu il s'agit d'un cas d'école, mais ce type de comportements est fréquent sur les infrastructures et souvent non-maitrisé.

Il existe donc un besoin d'un procédé de gestion permettant de réduire voire de supprimer les mouvements de données inutiles.

## RESUME DE L'INVENTION

L'invention offre une solution aux problèmes évoqués précédemment, en traitant les déplacements de données non plus strictement via des règles préétablies comme cela est fait dans l'état de la technique, mais en prenant en compte le niveau de stockage et la position des données nécessaires à l'exécution des travaux dans l'ordonnancement desdites travaux.

Un premier aspect de l'invention concerne un procédé de gestion des travaux dans un système informatique sur lequel s'exécute une pluralité de travaux, le système informatique comprenant un ordonnanceur, une pluralité de nœuds informatiques et au moins un premier niveau de stockage associé à un premier niveau de performance et un deuxième niveau de stockage associé à un deuxième niveau de performance inférieur au premier niveau de performance, chaque travail étant associé à un niveau de priorité déterminé à partir d'un jeu de paramètres comprenant le ou les nœuds sur lesquels doit être exécuté le travail, le procédé comprenant une étape d'ordonnancement, par l'ordonnanceur, des travaux en fonction du niveau de priorité associé à chaque travail. En outre, dans le procédé selon l'invention, le jeu de paramètres utilisé pour la détermination du niveau de priorité comprend également un premier paramètre relatif au niveau de stockage à utiliser pour les données nécessaires à l'exécution du travail considéré et un deuxième paramètre relatif à la position des données nécessaires à l'exécution du travail considéré.

Grâce à l'invention, il est possible de prendre en compte le niveau de stockage et la position (par exemple le chemin d'accès) dans l'ordonnancement des travaux et ainsi limiter les mouvements inutiles de données d'un niveau de stockage à l'autre. L'originalité de la solution proposée par les inventeurs vient notamment du fait que, identifiant le problème de mouvement inutile des données d'un niveau de stockage à l'autre, ils ont su voir qu'il était possible de limiter ce problème, non pas en modifiant la manière dont étaient déplacées ces données, mais en modifiant la manière dont étaient ordonnancés les travaux utilisant ces données.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Dans un mode de réalisation, le jeu de paramètres utilisé pour la détermination du niveau de priorité comprend également un paramètre relatif à l'utilisateur effectuant le travail.

Dans un mode de réalisation, le système comprend une solution de déplacement de données chargée de déplacer les données présentes sur un niveau de stockage dont le niveau de performance est différent du niveau de performance minimum vers un niveau de stockage de niveau de performance inférieur après un temps prédéterminé, le procédé comprenant, lorsque des données nécessaires à un travail dont l'exécution est planifiée sont susceptibles d'être déplacées par la solution de déplacement, une étape d'envoi, à la solution de déplacement, d'un signal entrainant le report ou l'annulation dudit déplacement.

On entend par « susceptible d'être déplacé » le fait que les données en question seront déplacées avant le début du travail considéré si seules les règles statiques de déplacement (par exemple, liées au dernier temps d'accès) sont appliquées.

Dans un mode de réalisation, le procédé comprend, en amont de l'exécution d'un travail, lorsque les données nécessaires à son exécution ne sont pas sur le niveau de stockage associé au travail considéré, une étape de déplacement des données nécessaires au travail sur le niveau de stockage ayant le niveau de performance associé au travail considéré.

Dans un mode de réalisation, le procédé comprend, lorsqu'un travail a terminé son exécution et que les données utilisées par le travail considéré ne sont pas nécessaires à l'exécution d'un ou plusieurs autres travaux, une étape de déplacement des données nécessaires à l'exécution du travail sur un niveau de stockage ayant un niveau de performance plus faible que le niveau de stockage sur lequel les données se situent.

Dans un mode de réalisation, le système comprend au moins deux niveaux de stockage choisis parmi les cinq niveaux de stockage suivants, chacun associé à un niveau de performance :

- Un premier niveau de stockage associé à un premier niveau de performance ;

- Un deuxième niveau de stockage associé à un deuxième niveau de performance inférieur au premier niveau de performance ;

- Un troisième niveau de stockage associé à un troisième niveau de performance inférieur au deuxième niveau de performance ;

- Un quatrième niveau de stockage associé à un quatrième niveau de performance inférieur au troisième niveau de performance ;

- Un cinquième niveau de stockage associé à un cinquième niveau de performance inférieur au quatrième niveau de performance.

Un deuxième aspect de l'invention concerne un système informatique comprenant une pluralité de nœuds et au moins un premier niveau de stockage associé à un premier niveau de performance et un deuxième niveau de stockage associé à un deuxième niveau de performance inférieur au premier niveau de performance, le système comprenant un ordonnanceur configuré pour mettre en œuvre un procédé selon l'invention.

Un troisième aspect de l'invention concerne un programme d'ordinateur comprenant des instructions qui conduisent le système informatique selon l'invention à exécuter les étapes du procédé selon l'invention.

Un quatrième aspect de l'invention concerne un support lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

La [Fig. 1] montre un ordinogramme d'un procédé selon l'invention.

La [Fig. 2] montre une représentation schématique d'un système informatique selon l'invention.

**DESCRIPTION DETAILLEE**

Les figures sont présentées à titre indicatif et nullement limitatif de l'invention. Sauf précision contraire, un même élément apparaissant sur des figures différentes présente une référence unique.

**Procédé de gestion des travaux dans un système informatique**

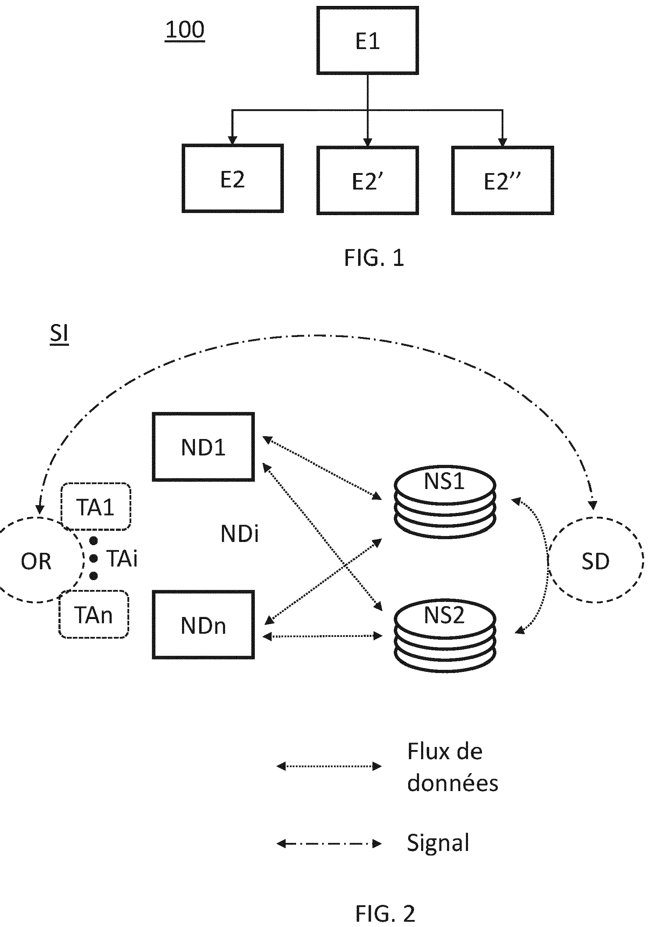

Un premier aspect de l'invention illustré à la [Fig. 1] et à la [Fig. 2] concerne un procédé 100 de gestion des travaux TAi dans un système informatique SI sur lequel s'exécute une pluralité de travaux TAi. Par exemple, le système informatique SI peut être une infrastructure de calcul haute performante (généralement abrévié HPC) sur lequel sont effectués des calculs, les calculs étant mis en œuvre au travers d'un ou plusieurs travaux.

Plus particulièrement, le système informatique SI comprend une pluralité de nœuds informatiques NDi (dans la [Fig. 2], le système comprend n nœuds). C'est sur ces nœuds informatiques NDi que seront exécutés les travaux TAi évoqués précédemment. Un nœud NDi peut correspondre à un serveur, par exemple un serveur de calcul.

Le système informatique SI selon l'invention comprend également au moins deux niveaux de stockage NS1/NS2, chaque niveau de stockage étant associé à au moins un moyen de stockage, ces niveaux de stockage permettant de stocker les données nécessaires à l'exécution des travaux TAi. Un moyen de stockage associé à un niveau de stockage donné NS1/NS2 peut prendre la forme d'une mémoire vive ou bien encore d'une mémoire non-volatile (type NVMe, SSD ou HDD) ou bien encore un moyen de stockage dans le nuage (ou *cloud* en anglais) . Plus généralement, il peut s'agir de tout moyen permettant de stocker des données informatiques.

Plus particulièrement, le système informatique SI comprend au moins un premier niveau de stockage NS1 associé à un premier niveau de performance et un deuxième niveau de stockage NS2 associé à un deuxième niveau de performance inférieur au premier niveau de performance. Dans un mode de réalisation, le niveau de performance est une fonction croissante de la bande passante du ou des moyens de stockage associés au niveau de stockage considéré NS1/NS2 et une fonction décroissante du temps de latence du ou des moyens de stockage associés au niveau de stockage considéré NS1/NS2 (relativement au nœud ou aux nœuds NDi sur lesquels le travail associé aux données est exécuté).

Dans un mode de réalisation, le système informatique SI comprend au moins deux niveaux de stockage NS1/NS2 parmi les cinq niveaux de stockage suivants :

- un premier niveau de stockage local (en général rapide et associé à des moyens de stockage de types disques NVMe ou SSD local au nœud de calcul considéré), parfois connu dans le domaine sous l'appellation anglaise scratch ;

- un deuxième niveau de stockage, dit stockage tampon (ou buffer en anglais

   - associé à des moyens de stockage de type NVMe ou SSD) agissant comme un intermédiaire rapide (ou burst en anglais),

- un troisième niveau de stockage à accès parallèles basé sur des technologies de type Lustre™ ou IBM Spectrum Scale™ GPFS (en général rapide et associé à des moyens de stockage de types disques SSD ou NVMe pour les métadonnées ou le cache, et disques standards rotatifs HDD pour les données) ;

- un quatrième niveau de stockage moins rapide que les précédents avec une capacité de stockage beaucoup plus importante et permettant de stocker les données sur du plus long terme tout en conservant des temps d'accès relativement raisonnables (par comparaison au cinquième niveau de stockage présenté ensuite) ;

- un cinquième niveau de stockage, dit d'archivage ou de sauvegarde, permettant de recourir à des technologies peu coûteuses en volume (par exemple associé à des moyens de stockage de type bandes ou tapes en anglais) mais avec des temps d'accès et des latences très importants.

L'ordre des niveaux de stockage NS1/NS2 dans la liste précédente est fonction du niveau de performance, le premier niveau de stockage de la liste ayant le niveau de performance le plus élevé et le cinquième niveau de stockage de la liste ayant le niveau de performance le plus faible.

Afin de pouvoir gérer l'ordonnancement des différents travaux TAi, chaque travail est associé à un niveau de priorité déterminé à partir d'un jeu de paramètres comprenant le ou les nœuds NDi sur lesquels doit être exécuté la travail TAi. De préférence, le jeu de paramètres utilisé pour la détermination du niveau de priorité comprend également un paramètre relatif à l'utilisateur effectuant le travail TAi considéré. De plus, le procédé 100 comprend une étape E1 d'ordonnancement, au moyen d'un ordonnanceur OR, des travaux TAi en fonction du niveau de priorité associé à chaque travail TAi. Autrement dit, l'ordre dans lequel vont être exécutés les différents travaux TAi est fonction du niveau de priorité attribué à chaque travail TAi en fonction du jeu de paramètres associé audit travail TAi.

Le procédé 100 selon l'invention est original en ce que le jeu de paramètres permettant de déterminer le niveau de priorité associé à chaque travail TAi comprend également un premier paramètre relatif au niveau de stockage à utiliser pour les données nécessaires à l'exécution du travail TAi considéré et un deuxième paramètre relatif à la position (par exemple le chemin d'accès) des données nécessaires à l'exécution du travail TAi considéré.

En prenant en compte le niveau de stockage et la position des données dans la détermination du niveau de priorité et donc dans l'ordonnancement des travaux TAi, il devient possible de limiter les mouvements inutiles de données d'un niveau de stockage à l'autre. L'originalité de la solution proposée par les inventeurs vient notamment du fait que, identifiant le problème de mouvements inutiles des données d'un niveau de stockage à l'autre, ils ont su voir qu'il était possible de limiter ce problème, non pas en modifiant la manière dont étaient déplacées ces données, mais en modifiant la manière dont était ordonnancés les travaux TAi utilisant ces données.

De manière générale, la détermination du niveau de priorité est basée sur des pondérations des différents paramètres du jeu de paramètres tels que l'utilisateur qui a soumis le travail (gestion de niveau de priorités en fonction de l'utilisateur ou de son groupe), le moment où le travail a été soumis (pour garantir qu'un travail ne restera jamais bloqué indéfiniment), les travaux passés ou courants exécutés par l'utilisateur, les ressources disponibles mais également celles demandées par le travail soumis, le temps passé en attente dans la file (âge), etc. (pour ne donner que quelques exemples de paramètres pouvant être présents dans le jeu de paramètres). Comme mentionné précédemment, dans la présente invention, la gestion de la priorité est étendue avec deux nouveaux paramètres relatifs aux données nécessaires à l'exécution du travail considéré. Il s'agit donc d'une priorité multi-facteurs qui est généralement une multiplication des facteurs.

Dans un mode de réalisation, le niveau de priorité est déterminé à l'aide de la relation suivante :

$$IP = \prod_{i=1}^{n} \alpha_i P_i$$

Où *IP* est le niveau de priorité, n est le nombre de paramètres du jeu de paramètres, $P_i$ est la valeur du paramètre *i* et $\alpha_i$ est un facteur de pondération associé au paramètre *i*

A titre d'illustration, dans un exemple de réalisation, lorsque l'ordonnancement est assuré par Slurm™, le lancement d'un travail TAi peut se faire à l'aide de la commande suivante :

$ srun -N 16 -n 1024 **-my_data_path** /globalfs/myjob/dataset/ - **storage_level** Lustre myjob

Comme le montre cet exemple, en plus des informations habituelles fournies à l'ordonnanceur OR, ce dernier se voit également fournir la position des données (ici au moyen d'un chemin d'accès au travers du paramètre **my_data_path**) et le niveau de stockage à utiliser (ici au moyen d'un nom associé au niveau de stockage désiré au travers du paramètre **storage_level**).

A titre de comparaison, voici la même commande selon l'état de la technique :

$ srun -N 16 -n 1024 myjob

Dans l'état de la technique, l'ordonnanceur OR ne tient pas compte du niveau de stockage ou de la position des données. Ces informations ne sont donc pas communiquées à l'ordonnanceur OR.

De manière générale, l'utilisation de paramètres associés aux données dans l'ordonnancement permet de rapprocher les travaux TAi utilisant les mêmes données, par exemple en faisant en sorte que deux travaux TAi utilisant les mêmes données aient des niveaux de priorité plus proche l'un de l'autre que les niveaux de priorité associés à ces mêmes travaux si ces niveaux de priorité avaient été déterminés sans paramètres relatifs aux données (c'est-à-dire déterminé selon l'état de la technique). L'utilité d'un tel rapprochement peut être illustrée au travers d'un exemple dans lequel une application utilise une volumétrie de données de 200GB sur une volumétrie disponible totale de 1TB (soit 20% du volume total). Ce jeu de données doit être sur un premier niveau de stockage NS1 (par ex. le niveau *burst butter*) permettant d'optimiser les entrées/sorties. Compte tenu des règles habituelles de déplacement des données, les données utilisées par cette application passent fréquemment entre ce niveau de stockage et un deuxième niveau de stockage (par ex. le système de fichiers parallèles Lustre). Si l'exécution des travaux TAi faisant usage de ces données est rapprochée dans le temps, alors les déplacements évoqués précédemment peuvent être supprimés entre l'exécution des différents travaux TAi associés à l'application. En d'autres termes, rapprocher les travaux TAi ayant besoin d'accéder à ces données sur un laps de temps donné permet de réduire les mouvements de données entre différents niveaux de stockage NS1/NS2. De préférence, il sera possible de modifier les mouvements de données de sorte que les données ne soient pas supprimées à la fin du travail TAi utilisant ces données (par exemple lorsqu'il est prévu d'effacer les données utilisées par un travail TAi après son exécution), mais dès que l'espace est requis ou bien encore, lorsqu'un temps prédéfini s'est écoulé depuis le dernier accès aux données.

Dans un mode de réalisation, le système informatique SI comprend une solution de déplacement SD de données chargée de déplacer les données présentes sur un niveau de stockage NS2 dont le niveau de performance est différent du niveau de performance minimum vers un niveau de stockage NS2 de niveau de performance inférieur après un temps prédéterminé, cette action étant en général nommée par le terme anglosaxon Hierarchical Storage management ou gestion hiérarchique des données en français (déjà introduite précédemment). Cette solution de déplacement SD peut par exemple prendre la forme d'un logiciel de hiérarchisation automatique des données ou logiciel HSM. De plus, le procédé 100 comprend, lorsque des données nécessaires à un travail dont l'exécution est planifiée sont susceptibles d'être déplacées par la solution de déplacement SD, une étape E2 d'envoi, à la solution de déplacement SD, d'un signal entrainant le report ou l'annulation dudit déplacement. Autrement dit, comme illustré à la [Fig. 2], l'ordonnanceur OR peut communiquer avec la solution de déplacement SD de sorte qu'une partie de la gestion des données est assurée à travers l'ordonnancement des travaux TAi. Cette communication permet ainsi d'éviter que des données qui vont être prochainement utilisées ne soient pas déplacées inutilement vers un niveau de stockage plus faible que celui nécessaire à l'exécution du travail TAi considéré.

Dans un mode de réalisation, le procédé 100 selon l'invention comprend, en amont de l'exécution d'un travail TAi, lorsque les données nécessaires à son exécution ne sont pas sur le niveau de stockage associé au travail TAi considéré, une étape E2' de déplacement des données nécessaires au travail TAi sur le niveau de stockage NS1/NS2 ayant le niveau de performance associé au travail TAi considérée. Ce déplacement pourra par exemple être mis en œuvre par la solution de déplacement SD des données, l'étape E2' de déplacement comprenant alors l'envoi, par l'ordonnanceur OR, d'un signal correspondant audit déplacement à la solution de déplacement SD. Dans un mode de réalisation, le terme « en amont de l'exécution » doit être compris comme le fait que le travail TAi considéré est le prochain à être exécuté. D'autres définitions sont cependant compatibles avec l'invention à partir du moment où cette étape E2' est mise en œuvre de sorte à permettre le rapatriement des données nécessaires à l'exécution du travail TAi avant le début de l'exécution du travail TAi considéré.

Dans un mode de réalisation, le procédé 100 comprend, lorsqu'un travail TAi a terminé son exécution et que les données utilisées par le travail TAi considéré ne sont pas nécessaires à l'exécution d'un ou plusieurs autres travaux TAi, une étape E2'' de déplacement des données nécessaires à l'exécution du travail TAi sur un niveau de stockage NS2 ayant un niveau de performance plus faible que le niveau de stockage NS1 sur lequel les données se situent. Comme précédemment, ce déplacement pourra par exemple être mis en œuvre par la solution de déplacement SD des données, l'étape E2'' de déplacement des données comprenant alors l'envoi, par l'ordonnanceur OR, d'un signal correspondant audit déplacement à la solution de déplacement SD.

**Système informatique mettant en œuvre un procédé selon l'invention**

Un deuxième aspect de l'invention illustré à la [Fig. 2] concerne un système informatique SI configuré pour exécuter un procédé 100 selon l'invention. Ce système informatique SI peut être une infrastructure de calcul haute performante (généralement abrévié HPC) sur lequel sont effectués des calculs, les calculs étant mis en œuvre au travers d'un ou plusieurs travaux TAi.

Plus particulièrement, le système informatique SI comprend une pluralité de nœuds informatiques NDi (dans la [Fig. 2], le système comprend n nœuds). C'est sur ces nœuds informatiques NDi que seront exécutés les travaux TAi évoqués précédemment. Un nœud NDi peut correspondre à un serveur, par exemple un serveur de calcul. De manière plus générale, un nœud informatique NDi comprend un moyen de calcul (par exemple un processeur) utilisé pour réaliser un ou plusieurs calculs associés à un travail TAi. Il comprend également une mémoire utilisée pour stocker les données nécessaires à l'exécution d'un calcul le temps nécessaire à cette exécution. Il comprend en outre des moyens de communications (par exemple une carte réseau) de sorte à pourvoir communiquer avec les autres nœuds NDi ou bien encore les différents niveaux de stockage NS1/NS2 du système informatique SI. Ces moyens de communication sont en outre utilisés pour communiquer avec l'ordonnanceurs OR en charge de l'ordonnancement des travaux TAi.

Comme déjà évoqué, le système informatique Si selon l'invention comprend également au moins deux niveaux de stockage NS1/NS2, chaque niveau de stockage étant associé à au moins un moyen de stockage, ces niveaux de stockage permettant de stocker les données nécessaires à l'exécution des travaux TAi. Un moyen de stockage associé à un niveau de stockage donné MS1/MS2 peut prendre la forme d'une mémoire vive ou bien encore d'une mémoire non-volatile. Plus généralement, il peut s'agir de tout moyen permettant de stocker des données informatiques.

Plus particulièrement, le système informatique SI comprend au moins un premier niveau de stockage NS1 associé à un premier niveau de performance et un deuxième niveau de stockage NS2 associé à un deuxième niveau de performance inférieur au premier niveau de performance. Dans un mode de réalisation, le niveau de performance est une fonction croissante de la bande passante du ou des moyens de stockage associés au niveau de stockage considéré NS1/NS2 et une fonction décroissante du temps de latence du ou des moyens de stockage associés au niveau de stockage considéré NS1/NS2 (relativement au nœud ou aux nœuds NDi sur lesquels le travail TAi associé aux données est exécuté).

Dans un mode de réalisation, le système informatique SI selon l'invention comprend au moins deux niveaux de stockage NS1/NS2 parmi les cinq niveaux de stockage suivants :

- un premier niveau de stockage local (en général rapide et associé à des moyens de stockage de types disques NVMe ou SSD local au nœud de calcul considéré), parfois connu dans le domaine sous l'appellation anglaise scratch ;

- un deuxième niveau de stockage, dit stockage tampon (ou buffer en anglais

  - associé à des moyens de stockage de type NVMe ou SSD) agissant comme un intermédiaire rapide (ou burst en anglais),

- un troisième niveau de stockage à accès parallèles basé sur des technologies de type Lustre ou Spectrum Scale GPFS (en général rapide et associé à des moyens de stockage de types disques SSD ou NVMe pour les métadonnées ou le cache, et disques standards rotatifs HDD pour les données) ;

- un quatrième niveau de stockage moins rapide que les précédents avec une capacité de stockage beaucoup plus importante et permettant de stocker les données sur du plus long terme tout en conservant des temps d'accès relativement raisonnables (par comparaison au cinquième niveau de stockage présenté ensuite) ;

- un cinquième niveau de stockage, dit d'archivage ou de sauvegarde, permettant de recourir à des technologies peu coûteuses en volume (par exemple associé à des moyens de stockage de type bandes ou tapes en anglais) mais avec des temps d'accès et des latences très importants.

L'ordonnancement des niveaux de stockage NS1/NS2 dans la liste précédente est fait en fonction du niveau de performance, le premier niveau de stockage de la liste ayant le niveau de performance le plus élevé et le cinquième niveau de stockage de la liste ayant le niveau de performance le plus faible.

**Autres applications possibles**

La présente invention a été illustrée au travers d'un exemple lié au calcul haute performance, mais elle peut trouver d'autres applications. Par exemple, les nœuds de calcul NDi peuvent être des serveurs situés dans un premier nuage informatique et le premier niveau de stockage NS1 peut être associé à un moyen de stockage dans le premier nuage informatique et le deuxième niveau de stockage NS2 peut être associé à un moyen de stockage dans un deuxième nuage informatique différent du premier nuage informatique et donc présentant pour ces serveurs NDi des performances moindres. L'exécution des travaux TAi sur ces serveurs NDi devra donc prendre en compte la performance associée à chaque niveau de stockage NS1/NS2 pour ordonnancer les travaux TAi.

Il ne s'agit bien entendu que d'un autre exemple, mais le procédé 100 de gestion selon l'invention peut être mis en place dans tout système informatique SI qui comprend un ou plusieurs nœuds NDi sur lesquels sont exécutées des travaux TAi et aux moins deux niveaux de stockage NS1/NS2 aux performances différentes.

**Revendications**

1. Procédé (100) de gestion des travaux (TAi) dans un système informatique (SI) sur lequel s'exécute une pluralité de travaux (TAi), le système informatique (SI) comprenant un ordonnanceur (OR), une pluralité de nœuds informatiques (NDi) et au moins un premier niveau de stockage (NS1) associé à un premier niveau de performance et un deuxième niveau de stockage (NS2) associé à un deuxième niveau de performance inférieur au premier niveau de performance, chaque travail (TAi) étant associé à un niveau de priorité déterminé à partir d'un jeu de paramètres comprenant le ou les nœud (NDi) sur lesquels doit être exécuté le travail, le procédé (100) comprenant une étape (E1) d'ordonnancement, par l'ordonnanceur (OR), des travaux (TAi) en fonction du niveau de priorité associé à chaque travail (TAi) ; le procédé (100) étant **caractérisé en ce que** le jeu de paramètres utilisé pour la détermination du niveau de priorité comprend également un premier paramètre relatif au niveau de stockage à utiliser pour les données nécessaires à l'exécution du travail (TAi) considéré et un deuxième paramètre relatif à la position des données nécessaires à l'exécution du travail (TAi) considéré.

2. Procédé (100) selon la revendication précédente dans lequel le système comprend une solution de déplacement (SD) de données chargée de déplacer les données présentes sur un niveau de stockage (NS1) dont le niveau de performance est différent du niveau de performance minimum vers un niveau de stockage (NS2) de niveau de performance inférieur après un temps prédéterminé, le procédé (100) comprenant, lorsque des données nécessaires à un travail (TAi) dont l'exécution est planifiée sont susceptibles d'être déplacées par la solution de déplacement, une étape (E2) d'envoi, à la solution de déplacement (SD), d'un signal entraînant le report ou l'annulation dudit déplacement.

3. Procédé (100) selon l'une des revendications précédentes comprenant, en amont de l'exécution d'un travail (TAi), lorsque les données nécessaires à son exécution ne sont pas sur le niveau de stockage associé au travail (TAi) considéré, une étape (E2') de déplacement des données nécessaires au travail (TAi) sur le niveau de stockage ayant le niveau de performance associé au travail (TAi) considéré.

4. Procédé (100) selon l'une des revendications précédentes comprenant, lorsqu'un travail (TAi) a terminé son exécution et que les données utilisées par le travail (TAi) considéré ne sont pas nécessaires à l'exécution d'un ou plusieurs autres travaux (TAi), une étape (E2") de déplacement des données nécessaires à l'exécution du travail (TAi) sur un niveau de stockage (NS2) ayant un niveau de performance plus faible que le niveau de stockage (NS1) sur lequel les données se situent.

5. Procédé (100) selon l'une des revendications précédentes dans lequel le système (SI) comprend au moins deux niveaux de stockage (NS1/NS2) choisis parmi les cinq niveaux de stockage suivants, chacun associé à un niveau de performance :

   - Un premier niveau de stockage associé à un premier niveau de performance ;
   - Un deuxième niveau de stockage associé à un deuxième niveau de performance inférieur au premier niveau de performancen ;
   - Un troisième niveau de stockage associé à un troisième niveau de performance inférieur au deuxième niveau de performance ;
- Un quatrième niveau de stockage associé à un quatrième niveau de performance inférieur au troisième niveau de performance ;
- Un cinquième niveau de stockage associé à un cinquième niveau de performance inférieur au quatrième niveau de performance.

6. Système informatique (SI) comprenant une pluralité de nœuds (NDi) et au moins un premier niveau de stockage (NS1) associé à un premier niveau de performance et un deuxième niveau de stockage (NS2) associé à un deuxième niveau de performance inférieur au premier niveau de performance, le système (SI) comprenant un ordonnanceur (OR) configuré pour mettre en œuvre un procédé (100) de gestion selon l'une des revendications précédentes.

7. Programme d'ordinateur comprenant des instructions qui conduisent le système informatique (SI) selon la revendication précédente à exécuter les étapes du procédé (100) selon l'une des revendications 1 à 5.

8. Support lisible par ordinateur, sur lequel est enregistré le programme d'ordinateur selon la revendication 7.

100

E1

E2    E2'    E2''

FIG. 1

SI

ND1

TA1

OR    TAi    NDi

TAn    NDn

NS1

NS2

SD

Flux de
données

Signal

FIG. 2

Europäisches
Patentamt

European
Patent Office

Office européen
des brevets

# RAPPORT DE RECHERCHE EUROPEENNE

Numéro de la demande

**EP 21 30 5901**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PAN FENGFENG ET AL: "H-Scheduler: Storage-Aware Task Scheduling for Heterogeneous-Storage Spark Clusters", 2018 IEEE 24TH INTERNATIONAL CONFERENCE ON PARALLEL AND DISTRIBUTED SYSTEMS (ICPADS), IEEE, 11 décembre 2018 (2018-12-11), pages 1-9, XP033520377, DOI: 10.1109/PADSW.2018.8644650 [extrait le 2019-02-19] * pages 9-15 * ----- | 1-8 | INV. G06F9/48 |
| A | US 9 430 290 B1 (GUPTA AAYUSH [US] ET AL) 30 août 2016 (2016-08-30) * colonnes 5-7; figures 7A, 7B * ----- | 2-5 | |

|  |  |  | **DOMAINES TECHNIQUES RECHERCHES (IPC)** |
|---|---|---|---|
|  |  |  | G06F |

Le présent rapport a été établi pour toutes les revendications

| Lieu de la recherche | Date d'achèvement de la recherche | Examinateur |
|---|---|---|
| La Haye | 7 décembre 2021 | Nourestani, S |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 30 5901

07−12−2021

| Document brevet cité au rapport de recherche | Date de publication | Membre(s) de la famille de brevet(s) | Date de publication |
|---|---|---|---|
| US 9430290 B1 | 30−08−2016 | CN 106020940 A | 12−10−2016 |
| | | DE 102016205297 A1 | 06−10−2016 |
| | | US 9430290 B1 | 30−08−2016 |
| | | US 2016335134 A1 | 17−11−2016 |
| | | US 2018107527 A1 | 19−04−2018 |

EPO FORM P0460